# EUROPÄISCHE PATENTSCHRIFT

(11) **EP 0 510 247 B1**
(45) Veröffentlichungstag und Bekanntmachung des Hinweises auf die Patenterteilung: **12.06.1996**
(21) Anmeldenummer: 91113000.3
(22) Anmeldetag: 02.08.1991
(51) Int. Cl.: H04H 7/00, H04B 1/66

(54) **Verfahren und Einrichtung zum Übertragen der digitalen Tonsignale von Tonstudios zu den einzelnen Sendestationen eines terrestrischen Rundfunk-Sendernetzes**
Method and apparatus for transmitting digital audio signals from audio studios to the individual transmitting stations of a terrestrial broadcasting network
Procédé et appareil pour la transmission de signaux numériques audio depuis les studios audio vers les stations individuelles d'émission d'un réseau de radiodiffusion terrestre

(30) Priorität: 25.04.1991 DE 4113584
(43) Veröffentlichungstag der Anmeldung: 28.10.1992
(73) Patentinhaber: Rohde & Schwarz GmbH & Co. KG, D-81671 München (DE)
(72) Erfinder: Dambacher, Paul, Dipl.-Ing. FH, W-8261 Ampfing (DE)
(74) Vertreter: Graf, Walter, Dipl.-Ing.

(56) Entgegenhaltungen:
- PROCEEDINGS - 7TH INTERNATIONAL CONFERENCE ON DIGITAL SATELLITE COMMUNICATIONS Mai 1986, BERLIN, DE Seiten 41 - 48 W SCHREITMüLLER ET AL. 'DSR - A digital sound broadcasting system for DBS and its possible extension to multiple access'
- IEEE INTERNATIONAL CONFERENCE ON COMMUNICATIONS, INCLUDING SUPERCOMM TECHNICAL SESSIONS Bd. 3, 1990, NEW YORK, US Seiten 937 - 941 G STOLL ET AL. 'High quality audio bit-rate reduction system family for different applications'
- RUNDFUNKTECHNISCHE MITTEILUNGEN Bd. 35, Nr. 2, März 1991, NORDESTEDT, DE Seiten 45 - 66 , XP229902 G PLENGE 'DAB - Ein neues Hörrundfunksystem - Stand der Entwicklung und Wege zu seiner Einführung'
- RUNDFUNKTECHNISCHE MITTEILUNGEN Bd. 33, Nr. 1, Januar 1989, NORDERSTEDT, DE Seiten 1 - 7 , XP579 U ASSMUS 'Datenübertragung im DSR'

## Beschreibung

Die Erfindung betrifft und geht aus von einem Verfahren und einer Einrichtung zum Übertragen der digitalen Tonsignale von Tonstudios zu den einzelnen Sendestationen eines terrestrischen Rundfunk-Sendernetzes.

Bei den geplanten künftigen Systemen zur digitalen Hörfunkübertragung ist es erforderlich, eine Vielzahl von einzelnen Programmen von den einzelnen Tonstudios der Rundfunkanstalten zu den einzelnen Sendestationen dieser landesweit geplanten terrestrischen Hörfunk-Sendernetze zu übertragen.

Beim sogenannten DAB-Netz (Digital-Audio-Broadcasting, beschrieben in "Digitale Audio Broadcasting" ITU-COM'89 Genf, Oktober 1989 und in "Künftige Systeme der digitalen Hörfunkübertragung", Bayerischer Rundfunk, Nov. 1990) sind beispielsweise Gleichwellen-Sendernetze vorgesehen, bei denen jeder DAB-Sender im sogenannten COFDM-Signal (Coded Orthogonal Frequency Division and Multiplexing) mehrere digitale Tonsignale, z.B. 6 Stereosignale, takt- und wortsynchron, also bitsynchron aussendet. Da ein Land aus mehreren einzelnen Rundfunk-Versorgungsgebieten bestehen kann, ergibt sich eine hohe Anzahl von Programmen, die dem DAB-Netz des Versorgungsgebietes bzw. Landes zuzuführen sind. Wenn beispielsweise vier Frequenzen für Gleichwellennetze vorgesehen sind und ein großes Land 10 Netze mit je sechs Programmen enthält, so ergibt dies bereits 60 Programme.

Zum Aussenden von Hörfunkprogrammen über einen Satellitensender zu den einzelnen Konsumer-Empfängern ist das sogenannten DS1/DSR (Digital Sound 1Mbit/s/Digital Satellit Radio)-Übertragungsverfahren bekannt (PROCEEDINGS - 7TH INTERNATIONAL CONFERENCE ON DIGITAL SATELLITE COMMUNICATONS, Mai 1986, Berlin, DE, Seiten 41 bis 48, W. Schreitmüller et al.: "DSR - A digital sound broadcasting system for DBS and its possible extension to multiple access"). Beim DS1-Verfahren werden zwei Tonsignale bzw. ein Stereosignal und Zusatzinformationen in einem seriellen Datenstrom übertragen. Zur Datenreduktion wird dabei ein Skalenfaktor eingeführt (Europäische Patentanmeldung o 133 697 bzw. Aufsatz "Audio-Coder DCA für den digitalen Hörfunk" in "Neues von Rohde & Schwarz, Heft 114, Sommer 1986, Seiten 13 bis 16). 16 dieser mittels DS1-Coder erzeugten DS1-Tonsignale werden dann über einen Datenmultiplexer/Modulator nach dem DSR-Verfahren miteinander verkämmt und einer Satelliten-Erdfunkstelle zugeführt ("Neues von Rohde & Schwarz", Heft 114, Seite 14). Die Erdfunkstelle sendet beispielsweise auf 18 GHz zum Satelliten, dieser sendet auf 12 GHz zu den einzelnen Konsumer-Satellitenempfängern. Aus dem demodulierten digitalen Datenstrom können über einen Demultiplexer/Decodierer aus den insgesamt bis zu 16 digitalen Tonsignalen die gewünschten Tonsignale wieder ausgewählt und nach Digital-Analog-Wandlung hörbar gemacht werden.

Zur Übertragung von digitalen Tonsignalen von den Tonstudios zu den Sendestationen eines terrestrischen Hörfunk-Sendernetzes ist an sich schon vorgeschlagen worden, hierfür die Satelliten-Übertragungstechnik anzuwenden (Rohde & Schwarz Studie "Programm and Data Lines to VHF-FM-Transmitters", Oktober 1990). Selbst wenn für diese vorgeschlagene Satelliten-Übertragungstechnik die für die unmittelbare Programmausstrahlung vom Satelliten zu den Konsumer-Empfängern entwickelte DS1/DSR-Technik angewendet würde, so wäre damit wiederum nur die Übertragung von 16 Programmen pro DSR/Kanal möglich, was für moderne landesweite Rundfunk-Sendernetze mit regionaler Versorgung nicht ausreichend wäre.

Es ist Aufgabe der Erfindung ein einfaches Verfahren und eine einfache Einrichtung zu schaffen, mit der auf ökonomischem Wege eine Vielzahl von hochwertigen Tonsignalen von den Tonstudios zu den einzelnen Sendestationen eines terrestrischen digitalen oder analogen Rundfunk-Sendernetzes übertragen werden können.

Diese Aufgabe wird gelöst durch ein Verfahren laut Hauptanspruch. Vorteilhafte Weiterbildungen insbesondere für Einrichtungen zum Ausführen dieses Verfahrens und zwar zum Einsatz bei einem DAB-Sendernetz, bei einem üblichen terrestrischen VHF-FM-Sendernetz und auch bei einem erweiterten DSR-Verfahren ergeben sich aus den Unteransprüchen.

Die Erfindung geht davon aus, daß zur Übertragung der Tonsignale von einem Tonstudio zu den einzelnen Sendestationen eines Rundfunk-Sendernetzes das an sich zur Versorgung von Konsumer-Rundfunkempfängern über einen Satellitensender bekannte DS1/DSR-Verfahren am besten geeignet ist, da die für die Ausführung dieses Verfahrens nötige Technik sehr ausgereift ist und sich seit langem bestens bewährt hat. Die für die Ausführung dieses Verfahrens erforderlichen DS1-Coder und DSR-Multiplexer/Modulatoren sind zwischenzeitlich handelsübliche Geräte, ebenso die auf der Empfängerseite nötigen DSR-Demodulatoren, Demultiplexer und Decoder. Mit einem solchen DS1/DSR-Verfahren können allerdings nur sechzehn einzelne Programme übertragen werden, da der bekannte DSR-Coder nur sechzehn DS1-Kanäle zur Verfügung hat. Da bei künftigen Rundfunk-Sendernetzen wesentlich mehr Programme gleichzeitig zu den einzelnen Sendestationen übertragen werden müssen, wird gemäß der Erfindung in Kombination mit diesem DS1/DSR-Verfahren eine zusätzliche Datenreduktion der zu übertragenden Tonsignale im Tonstudio durchgeführt und zwar unter Berücksichtigung der psychoakustischen Phänomene des menschlichen Ohres. Hierfür ist beispielsweise das sogenannte MUSICAM (Masking Universal Subband Integrated Coding And Multiplexing)-Verfahren geeignet ("MUSICAM, An Universal Subband Coding System Description" von CCETT, IRT, Matsushita & Philips) bzw. (IEEE INTERNATIONAL CONFERENCE ON COMMUNICATIONS, INCLUDING SUPERCOMM TECHNICAL SESSIONS, Bd. 3, 1990, New York, US, Seiten 937 bis 941, G. Stoll et al.: "High quality audio bit-rate reduction system family for different applications"), das zur Übertragung von Tonsignalen auf schmalbandigen Übertragungskanälen wie Telefonleitungen zwischen Tonstudios und Sendern benutzt wird. Durch die Kombination eines solchen bekannten Datenreduktionsverfahrens mit einem DS1/DSR-Satelliten-Übertragungsverfahren wird es möglich, nicht nur 16 Programme zu den einzelnen Sendern beispielsweise eines DAB-Sendernetzes zu übertragen, sondern ein Vielfaches hiervon. Das erfindungsgemäße Verfahren arbeitet dabei vor allem auch sehr ökonomisch, da es mit handelsüblichen Geräten ausgeführt werden kann.

Ein erfindungsgemäßes Verfahren ist insbesondere gut geeignet für die Versorgung der einzelnen Senderstationen eines oben erwähnten künftigen DAB-Netzes, da je nach Grad der verwendeten Datenreduktion beispielsweise drei- bis siebenmal soviel Programme übertragen werden können als nach der DS1/DSR-Übertragungstechnik, die ja auf ein Stereoprogramm (oder zwei Monoprogramme) je DS1-Kanal und auf nur 16 Stereoprogramme pro DSR-Kanal beschränktist.

In gleicher Weise ist das erfindungsgemäße Verfahren auch zur Versorgung eines üblichen terrestrischen VHF-FM-Sendernetzes oder eines sogenannten kompatiblen DAB-Netzes geeignet, bei welchem pro Sender nur ein einziges digitales Programmsignal in dem Frequenzband wie für einen VHF-FM-Sender abgestrahlt wird.

Als Breitband-Übertragungssystem wird bei dem erfindungsgemäßen Verfahren vorzugsweise ein übliches Satelliten-Übertragungssystem benutzt, in gleicher Weise kann jedoch die Übertragung auch über ein Breitband-Kabelnetz erfolgen, wie es beispielsweise von der Schweizerischen Post für die digitale Hörfunk-Versorgung benutzt wird (Bericht Nr. VD14.1049 U vom 24.1.91 der Generaldirektion PTT). In gleicher Weise könnte die Übertragung der DSR-Signale über ein Glasfaser-Verteilerkabelnetz oder auch über Richtfunkstrecken erfolgen.

Die Erfindung wird im folgenden anhand schematischer Zeichnungen an Ausführungsbeispielen naher erläutert.

Fig. 1 zeigt das Blockschaltbild der Quellenseite eines Satelliten-Übertragungssystems, bei dem das erfindungsgemäße Verfahren angewendet wird.

Fig. 2 zeigt den zugehörigen Empfangsteil des Satelliten-Übertragungssystems an einer Sendestation eines DAB-Sendernetzes.

Fig. 3 zeigt die Abwandlung der Einrichtung nach Fig.2 für die Versorgung eines VHF-FM-Sendernetzes.

Fig. 4 zeigt tabellarisch die Vielzahl von Programmen, die je DSR-Kanal nach dem erfindungsgemäßen Verfahren übertragen werden können.

Fig. 5 zeigt anhand eines Blockschaltbildes wie ein üblicher DSR-Konsumer-Empfänger zum unmittelbaren Empfang von nach dem erfindungsgemäßen Verfahren übertragenen Tonsignalen abgewandelt werden kann.

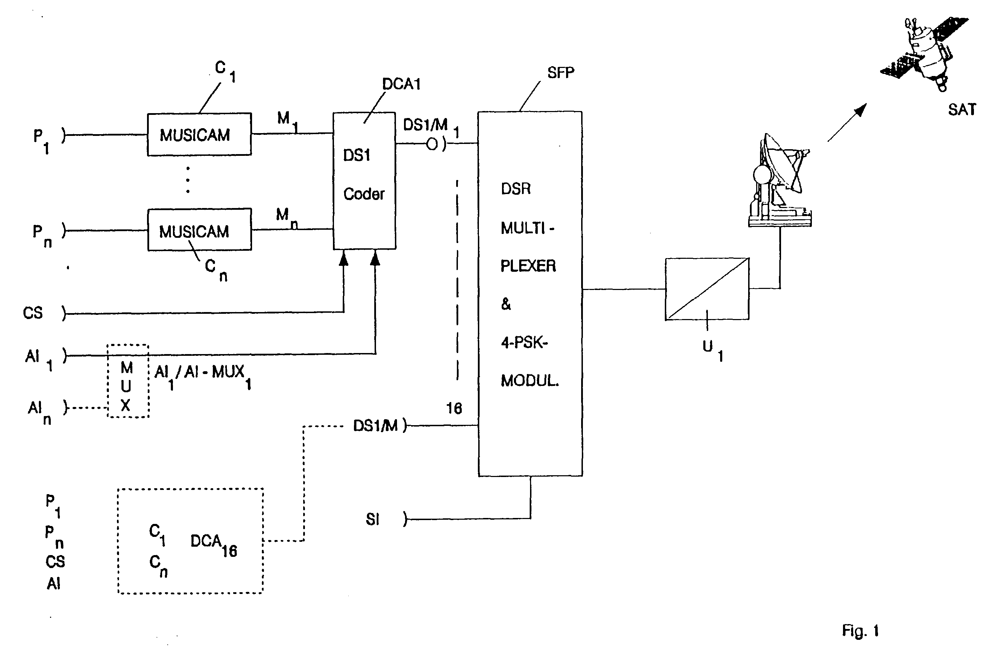

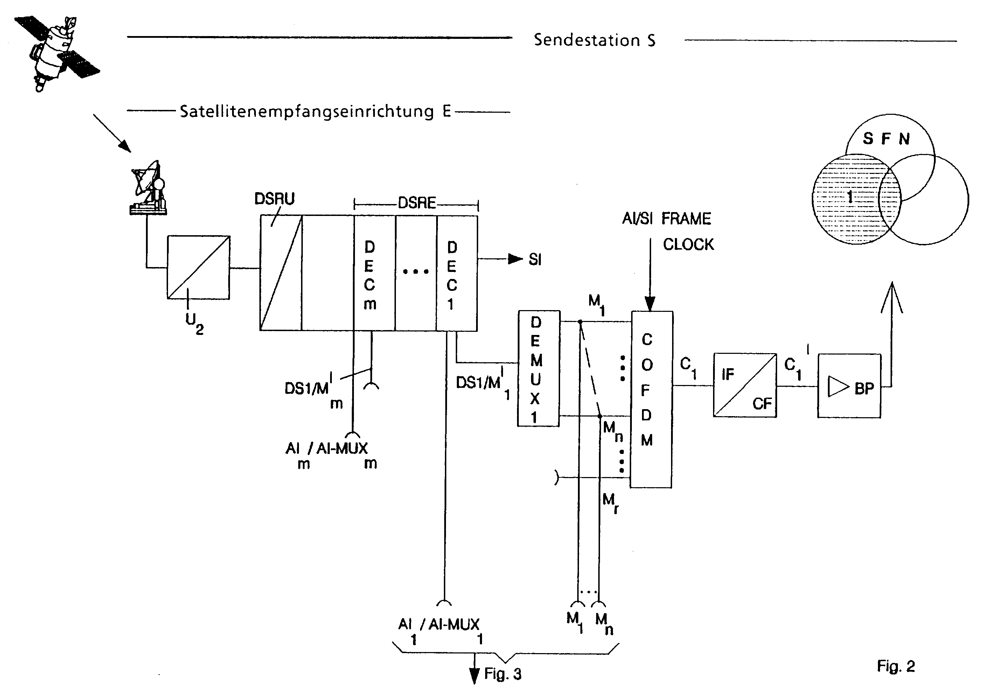

Fig. 1 und 2 zeigen das Blockschaltbild einer nach dem erfindungsgemäßen Verfahren arbeitenden Einrichtung zum Übertragen der Tonsignale P von einem oder mehreren Tonstudios zu den einzelnen Sendestationen S eines Rundfunk-Sendernetzes. Die Übertragung erfolgt nach dem bekannten DS1/DSR-Verfahren. Auf der Quellenseite sind dazu bis zu 16 DS1-Coder DCA 1 bis DCA16 vorgesehen, außerdem ein DSR-Multiplexer mit nachfolgendem 4-PSK-Modulator (SFP) mit entsprechend 16 Eingängen zum Anschluß von bis zu 16 DS1-Codern. Abweichend von der DS1-Norm wird pro DS1-Kanal nicht nur ein einziges Tonsignal übertragen, sondern gemäß der Erfindung werden pro DS1-Kanal n datenreduzierte Tonsignale M₁ bis Mₙ übertragen, es werden je DS1-Coder also von der DS1-Norm abgewandelte Tonsignale DS1/M erzeugt, die sich aus mehreren n datenreduzierten Tonsignalen zusammensetzen und die den Eingängen des DSR-Multiplexers SFP zugeführt werden.

Im Ausführungsbeispiel nach Fig. 1 werden in den Tonstudios die analogen oder digitalen Mono-oder Stereo-Tonsignale P jeweils einem beispielsweise nach dem MUSICAM-Verfahren arbeitenden Coder C₁ bis Cₙ zugeführt. Die ursprünglich beispielsweise 768kbit/s-P-Tonsignale (16bit, 48kHz) werden dadurch auf beispielsweise 128, 96 oder 64 kbit/s datenreduziert. Diese datenreduzierten Tonsignale M₁ bis Mₙ werden dann einem der 16 DS1-Coder DCA 1 bis DCA 16 zugeführt, in welchem diese datenreduzierten Tonsignale M₁ bis Mₙ nach dem DS1-Verfahren codiert werden. In einem praktischen Ausführungsbeispiel sind beispielsweise 4 MUSICAM-Coder C1 bis C4 für je ein Stereosignal (n = 4) vorgesehen. Damit werden pro DS1-Coder insgesamt vier datenreduzierte Tonsignale M₁ bis M₄ übertragen. Die MUSICAM-Codierung erfolgt vorzugsweise bereits im Studio, auch die DS1-Codierung könnte unmittelbar im Studio durchgeführt werden, es ist aber auch möglich, die Signale M₁ bis Mₙ über digitale Leitungen zunächst zu der Satelliten-Bodenstation zu übertragen und die DS1-Codierung erst dort vorzunehmen. Die Ausgänge der DS1 Coder DCA1 bis DCA16 führen die Signale DS1/M1 bis DS1/M16, die in Bezug auf Rahmenstruktur und Zusatzinformationen dem ursprünglichen DS1-Signalen entsprechen. Im Datenmultiplexer, SFP, werden die 16 DS1/M-Signale miteinander verkämmt und zusammen mit Rahmensynchronworten ein Datenstrom erzeugt, der unmittelbar dem 4-PSK-Modulator zugeführt wird. Die Fehlerverschleierung am Eingang des DSR-Multiplexers gemäß der DS1-Norm wird bei der erfindungsgemäßen Anwendung stillgelegt. Der 4-PSK-modulierte ZF-Träger wird in einem Umsetzer U₁ in die Satelliten-Sendefrequenzlage von beispielsweise 18 GHz umgesetzt und zum eigentlichen Satelliten SAT übertragen und von dortbeispielsweise mit 12 GHz wieder abgestrahlt.

Fig. 2 zeigt das Blockschaltbild einer DAB-Sendestation.

Jeder einzelnen Sendestation S des zu versorgenden Sendenetzes ist eine übliche Satellitenempfangseinrichtung E zugeordnet, in welcher das über die Satellitenantenne empfangene Satellitensignal nach Frequenzumsetzung U2 (outdoor unit) und in einem Satellitenumsetzer DSRU in eine für die nachfolgende Decodierung geeignete Frequenzlage umgesetzt wird. Das Ausgangssignal dieses Umsetzers DSRU wird einem Digitalton-Empfänger, DSRE, zugeführt und dort in mehreren (m) Decodierern DEC1 bis DECm decodiert.Aus den insgesamt bis zu 16 übertragenen DS1/M-Signalen können beispielsweise bis zu m DS1/M'-Signale ausgewählt werden. Diese DS1/M'-Signale entsprechen den ursprünglichen DS1/M-Signalen der Quellenseite, sie besitzen jedoch eine andere Rahmenstruktur. Jedes einzelne dieser insgesamt m DS1/M'-Signale wird über einen Demultiplexer DEMUX in die ursprünglichen MUSICAM-Signale M1 bis Mn überführt, die dann als digitale Tonsignale dem Modulator COFDM der Sendestation S zugeführt werden. Über den Sender der Sendestation S können damit aus einer Vielzahl der insgesamt von der Quellenseite angebotenen Programme P die für die Ausstrahlung gewünschten Programme ausgewählt und abgestrahlt werden.

Die eigentliche DS1-DSR-Satelliten-Übertragungstechnik beginnend auf der Quellenseite bei den DS1-Codern DCA 1 bis DCA 16 über Multiplexer, Satelliten-Sendestation, Satellit, Satelliten-Empfangsstation einschließlich Demultiplexer ist von bekannter Bauart, wie sie beispielsweise beschrieben ist in "Neues von Rohde & Schwarz" Heft 114, Seite 14. Als DS1-Coder werden beispielsweise die Coder DCA der Firma Rohde & Schwarz benutzt, der Multiplexer einschließlich 4-PSK-Modulator ist beispielsweise ein Gerät SFP der Firma Rohde & Schwarz, der Satellitenempfänger ist beispielsweise eine Gerätekombination aus dem Digitalton-Umsetzer DSRU und dem Digitalton-Empfänger DSRE der Firma Rohde & Schwarz. Die zusätzlich noch verwendeten MUSICAM-Coder C₁ bis Cₙ sind aus handelsüblichen Chips aufgebaut, das erfindungsgemäße Übertragungssystem ist daher sehr ökonomisch herstellbar. Der Unterschied gegenüber dem bekannten DS1/DSR-Übertragungsverfahren besteht darin, daß pro DS1-Kanal nicht wie bisher nur ein einziges Links/Rechts-Stereosignal übertragen wird, das nach der bekannten 16/14-bit-Gleitkommaarithmetik mit Skalenfaktor codiert wird, sondern daß über die Nettobitrate von 896 kbit/s jedes einzelnen DS1-Signals mehrere datenreduzierte Tonsignale M₁ bis Mₙ übertragen werden, die auf der Basis psychoakustischer Phänomene des menschlichen Ohres entsprechend datenreduziert sind. Die Skalenfaktortechnik im DS1 und damit verbundener Bit-Verschiebetechnik kann beibehalten werden, da der Skalenfaktor durch 21malige Wiederholung pro Block mit 64 Abtastwerten sicher übertragen wird, sie kann aber auch durch einfache Festlegung des Skalenfaktors auf z.B. SKF = LOGISH 100 stillgelegt werden. Dann werden die 14 bit ohne Verschiebetechnik übertragen. Da die DS1-Schnittstelle intern auf zweimal 16 bit/par. mit 32 kHz Abtastrate aufgebaut ist, wobei zweimal 14 bit als Nettobitrate zur Übertragung zur Verfügung stehen, steht im DS1-Coder an parallelen Eingängen jeweils die volle Nettokapazität des DS1-Signals zur Übertragung zur Verfügung. Die Nettobitrate läßt sich sehr einfach auf das Vielfache der Taktrate 32 kHz adaptieren. Die Taktraten entsprechen dann z.B. direkt den Bitraten von Audio-Basisband-Codierungen mit Datenreduktion nach MUSICAM.

Die Blockcodierung im DSR-Kanal mit einem 63/44 BCH-Code macht einen Unterschied in geschützte und ungeschützte Bitübertragung. Geschützt heißt, daß 2 Bitfehler pro BCH-Block korrigiert werden können.Damit stehen im DSR-Kanal pro DS1 zur Verfügung:
2x11bit/32kHz DSR-geschützt
2x3 bit/32kHz DSR-ungeschützt.

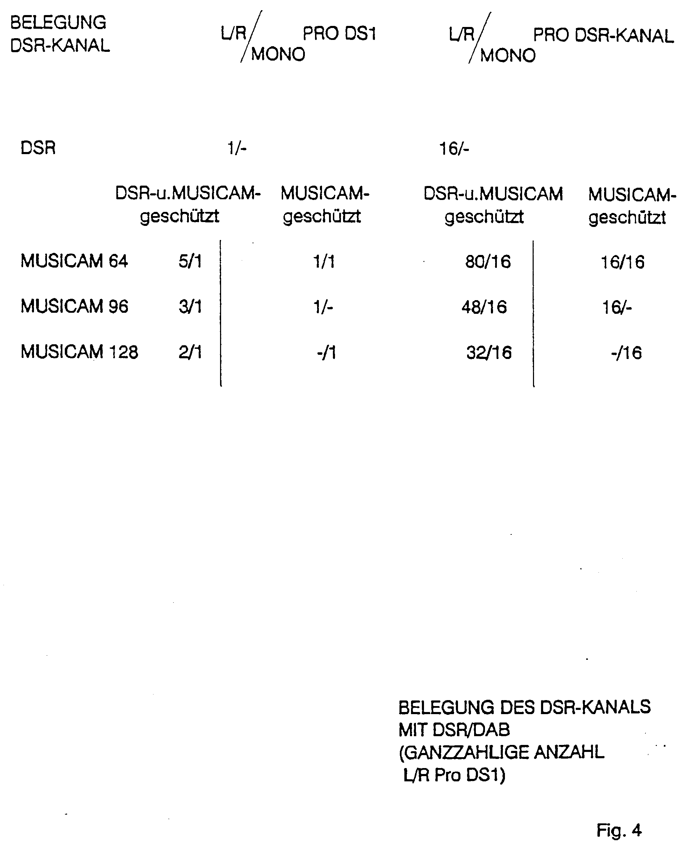

Diese Unterscheidung kann dadurch aufgehoben werden, daß am Eingang des DS1-Coders eine Verwürfelung vorgenommen wird. Außerdem weist die Basisbandcodierung z.B. MUSICAM einen eigenen Fehlerschutz auf. Z.B. ist bei einer Bit-Error-Rate BER <10⁻³ die subjektive Qualität bei MUSICAM vernachlässigbar beeinträchtigt. Da diese BER-Bedingung bei DSR zutrifft, können auch von daher die ungeschützten 3 Bits pro 14 bit benutzt werden. In der Tabelle in Fig. 4 sind die Anzahl der Programmkanäle Links/Rechts und Mono pro DS1-Kanal und pro DSR-Kanalangegeben, wobei in DSR-**und** MUSICAM-geschützte sowie MUSICAM-geschützte Kanäle unterschieden wird. In der Tabelle sind z.B. MUSICAM 64 für Basisbandcodierung mit 64Kbit/sec/Mono angegeben. Die errechneten Kanäle basieren auf einer ganzzahligen Zahl von L/R-Stereosignalen pro DS1-Kanal.

Nach dem DSR-Verfahren arbeitende Satellitenempfänger gibt es zwischenzeitlich in Consumer-Technik und auch in professioneller Technik. In beiden wird ein Demultiplexer/Decoder als Chip-Bauteil (z.B. SAA7500 von Philips Semiconductor) eingesetzt. Auf diese Weise kann jede Empfangsstation E sehr einfach und preiswert aus handelsüblichen Bauteilen aufgebaut werden. Der Demultiplexer/Decoder bringt die DS1/M'-Daten in bit-serieller Form an einen Ausgang mit nicht korrigierten Bitfehlern und an einen zweiten Ausgang mit Fehlerkorrektur nach der DSR-Norm. Diese Daten sind vor der Schaltungsfunktion Fehlerverwischung (Concealment) abgegriffen. Die DS1/M'-Daten werden nach entsprechendem Demultiplexing auf die z.B. MUSICAM-Signale M₁ bis Mₙ dem COFDM-Modulator des Senders zugeführt, der nach dem bekannten DAB-Sendernetzprinzip eine breitbandige Übertragung der Programme erlaubt, wie es in der eingangs erwähnten Druckschrift "Künftige Systeme der digitalen Hörfunkübertragung" des Bayerischen Rundfunks näher beschrieben ist. Auch dieser Teil jeder einzelnen Sendestation S ist von bekannter Bauart.

Die COFDM-Signale im DAB-Gleichwellennetz müssen sowohl taktsynchron als auch wortsynchron (d. h. bitsynchron) sein. Taktsynchronität ist dadurch gegeben, daß die DS1-Coder jeweils durch ein Taktsignal CS1 von 1,024 MHz synchronisiert sind, so daß alle DS1/M-Signale und die DSR-Signale taktsynchron sind. Um die zusätzlich geforderte Wortsynchronität zu erreichen wird ein Teil des DS1-Datenkanals Al mit der Nettobitrate von 24 Kbit/sec, der sogenannte U/V-Kanal für Zusatzinformationen für die Übertragung eines entsprechenden Wortsynchronisiersignals benutzt oder ein Teil eines noch freien Teils im sogenannten Sonderdienst-Hauptrahmen B des DSR-Signalrahmens (Sonderinformationen Sl des DSR-Rahmens mit 32 Kbit/sec). Das auf diese Weise zusätzlich übertragene Wort "Synchronisationssignal" kann dann in jeder einzelnen Sendestation S zur Wortsynchronisation der ausgestrahlten Programme benutzt werden.

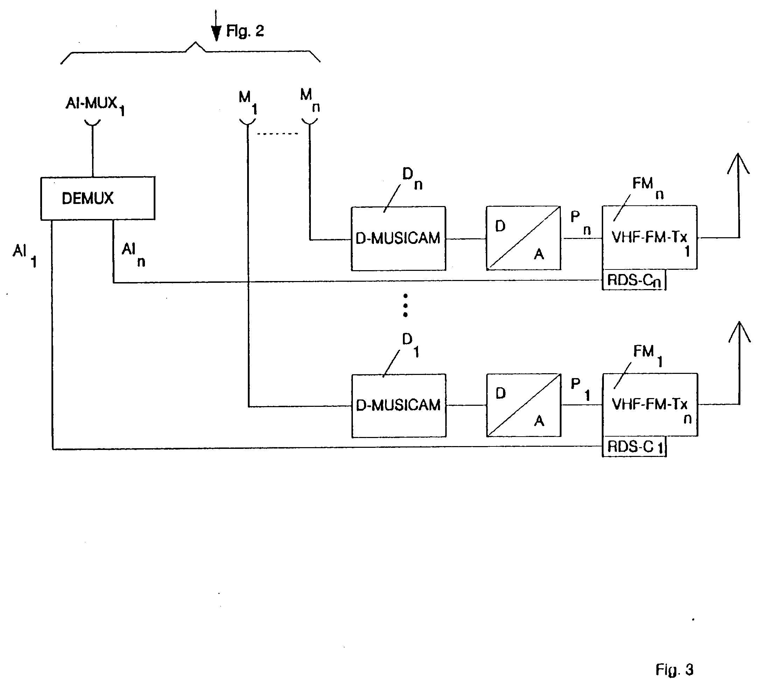

Das erfindungsgemäße Verfahren ist in gleicher Weise nach Fig. 3 geeignet zur Übertragung der Tonsignale von einem Studio zu den einzelnen Sendestationen eines VHF-FM-Sendernetzes. Der quellenseitige Teil der Satelliten-Übertragungsstrecke ist dabei wieder gemäß Fig. 1 aufgebaut, der Empfangsteil der Satellitenübertragungsstrecke jeder einzelnen FM-Sendestation FM1 bis FMn besitzt nach den einzelnen MUSICAM-Decodern D₁ bis Dₙ gemäß Fig. 3 jeweils zusätzliche D/A-Wandler, die aus den über den Demultiplexer wieder getrennten und nach dem MUSICAM-Verfahren auch wieder decodierten, digitalen Tonsignalen die analogen Tonsignale erzeugen, die überden Sender abgestrahlt werden sollen.

Entspechend der Programmzuführung zu VHF-FM-Sendern kann das Verfahren nach Fig. 2 auch für DAB-Sender mit nur einem digitalen Programmsignal pro Sender eingesetzt werden. Dieses sog. "Kompatible DAB" basiertauch auf MUSICAM und stellt eine In-Band-Lösung dar mit der Nutzung einer VHF-FM-Bandbreite.

Bei VHF-FM-Sendersystemen sind sogenannte Radio-Daten-Systeme (RDS) üblich, mit denen programmabhängige Daten, die beispielsweise im Tonstudio erzeugt werden, zum Benutzer mit übertragen werden. Auch diese RDS-Signale können nach dem erfindungsgemäßen Verfahren zum RDS-Coder im VHF-FM-Sender übertragen werden, wobei die programmabhängigen RDS-Daten Al1 bis Aln im Tonstudio für jeden einzelnen MUSICAM-Kanal M1 bis Mn entsprechend adressiert und durch Multiplexing zu einer gesonderten Informationseinheit Al-MUX zusammengefaßt werden und dann in dem Zusatzinformationskanal des DS1-Signals übertragen werden, was im DS1-Coder DCA 1 bis DCA 16 in bekannter Weise erfolgt. Diese Zusatzdaten werden dann im DSR-Empfänger DSRE in der Sendestation S als gesonderte Daten ausgelesen und nach Demultiplexing DEMUX dem RDS-Coder RDS-C1 bis RDS-Cn der FM-Sender zugeführt, wie dies Fig. 3 zeigt.

Die Übertragungstechnik nach Fig. 1, 2 und 3 kann natürlich auch gemeinsam angewendet werden, wenn beispielsweise gleichzeitig ein DAB-Sendernetz und ein parallel dazu betriebenes FM-Sendernetz mit Programmen versorgt werden soll. Außerdem müssen nicht sämtliche DS1-Kanäle des Übertragungssystems für den erfindungsgemäßen Zweck für die Zusammensetzung der DS1/M-Signale aus mehreren zusätzlichen datenreduzierten Tonsignalen benutzt werden, es ist durchaus möglich, einen Teil der zur Verfügung stehenden 16 DS1-Kanäle in üblicher Weise mit einem reinen nicht datenreduzierten digitalen DS1-Tonsignal zu speisen und nur den Rest dieser DS1-Kanale für den erfindungsgemäßen Zweck auch mit unterschiedlichen Datenraten auszunützen.

Das erfindungsgemäße Verfahren kann auch unmittelbar zur Erweiterung des bekannten digitalen Hörfunksystems DSR benutzt werden (Extended DSR: EDSR). Dazu ist es nur erforderlich den für den DSR-Satelliten-Hörfunkempfang vorgesehenen Consumer-Empfänger mit einem entsprechenden MUSICAM-Decoder-Chip mit einer entsprechenden Auswahllogik auszustatten, der Benutzer eines solchen Empfängers kann dann unmittelbar aus den nach dem erfindungsgemäßen Verfahren übertragenden digitalen Tonsignalen die von ihm gewünschten datenreduzierten Tonsignale auswählen und abhören. Damit kann das bekannte DSR-Übertragungssystem auf ein Vielfaches der bisher angebotenen Programme erweitert werden.

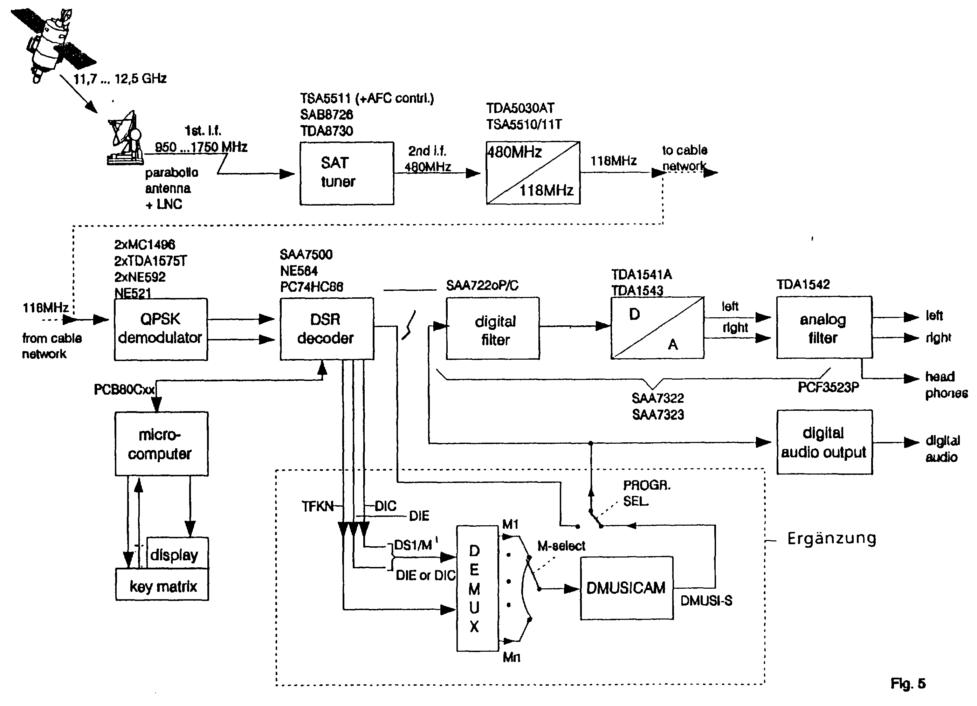

Fig. 5 zeigt anhand eines Blockschaltbildes eines DSR-Satelliten-Hörfunkempfängers FT990 der Firma Philips, wie ein solcher handelsüblicher Konsumer-Empfänger auf einfache Weise für den unmittelbaren Empfang von gemäß der Erfindung übertragenen digitalen Tonsignalen ergänzt werden kann. Dieser Konsumer-Empfänger nach Fig. 5 entspricht im Prinzip der Gerätekombination DSRU kombiniert mit einem Digitaltonempfänger DSRE der Firma Rohde & Schwarz, wie er in Fig. 2 dargestellt und beschrieben ist. Das über Satellitenantenne empfangene Signal wird in einem Tuner mit anschließendem Frequenzumsetzer auf eine Zwischenfrequenz von 118MHz umgesetzt und dann in den 4-PSK-Demodulator eingespeist. Das demodulierte Signal wird dem DSR-Decoder SAA 7500 zugeführt. Das decodierte Signal wird über ein Digitalfilter einem D/A-Wandler zugeführt und am Ausgang eines Analogfilters steht dann das über Satelliten empfangene Stereotonsignal zur weiteren Verarbeitung zur Verfügung.

Dieser handelsübliche Aufbau eines Konsumer-Empfängers kann auf einfache Weise nur durch Hinzufügung eines Demultiplexers DEMUX und einer Programmauswahllogik M-select in einen Empfänger umgewandelt werden, der für den unmittelbaren Empfang von nach dem erfindungsgemäßen Verfahren über eine Satellitenstrecke übertragenen digitalen Tonsignal geeignet ist. Die Ausgänge TFKN und DIE oder DEC des DSR-Decoders werden mit dem Demultiplexer DEMUX verbunden, der Ausgang TFKN liefert ein Taktsignal mit 160Bit/Rahmen (31,25 µs), der Ausgang DIE liefert das DS1/M'-Signal in 77Bit/Blöcken in DSR-unkorrigierter Form, der Ausgang DEC führt das DS1/M'-Signal in 63 Bit-BCH-Blöcken in DSR-korrigierter Form. Die von den Ausgängen DEC oder DIE dem Demultiplexer DEMUX zugeführten DS1/M'-Signale werden wieder in die ursprünglichen MUSICAM-Signale M₁ bis Mₙ umgesetzt, über die dem Ausgang des Demultiplexers zugeordnete Auswahllogik M-select wird das vom Benutzer gewünschte MUSICAM-Signal ausgewählt, das ausgewählte MUSICAM-Signal wird dem nachfolgenden MUSICAM-Decoder zugeführt, der wiederum z.B. ein handelsüberlicher Chip, beispielsweise der Firma Philips Semiconductor ist, das decodierte Signal dieses MUSICAM-Decoders wird dann über einen Wahlschalter dem Eingang des D/A-Wandlers zugeführt. Auf diese Weise kann vom Kunden jedes beliebige MUSICAM-Signal, das quellenseitig über die Satellitenstrecke eingespeist wird, ausgewählt und abgehört werden, mit dem Wahlschalter ist es möglich, den Konsumer-Empfänger entweder in seiner ursprünglichen Betriebsweise zu benutzen, d.h. pro DSR können bis zu 16 Stereosignale übertragen werden, in der anderen Schaltstellung dieses Umschalters die MUSICAM-codierten Tonsignale ausgewertet werden, wobei also in jedem einzelnen DS1-Kanal mehrere Tonsignale übertragen und vom Benutzer ausgewählt werden können.

Durch diese einfache Ergänzung eines Konsumer-DSR-Empfängers mit einem MUSICAM-Decoder und einer einfachen Demultiplexer-Schaltung kann also das Programmangebot für einen Benutzer von bisher 16 Programmen erweitert werden auf z.B. 64 Stereoprogramme bei Anwendung von MUSICAM mit 96kBit/s/Monosignal. Der MUSICAM-Decoder sowie der Demultiplexer sind einfache handelsübliche LSl-Chips, so daß auf sehr ökonomische Weise beispielsweise das Programmangebot um den Faktor 4 erweitert werden kann.

## Patentansprüche

1. Verfahren zum Übertragen der digitalen Tonsignale (P) von Tonstudios zu den einzelnen Sendestationen (S) eines terrestrischen Rundfunk-Sendernetzes,
dadurch **gekennzeichnet,**
daß der Datenfluß der zu übertragenden digitalen Tonsignale (P) zunächst nach einem die psychoakustischen Phänomene des menschlichen Ohres berücksichtigenden bekannten Datenreduktionsverfahren datenreduziert wird,
jeweils mehrere dieser datenreduzierten digitalen Tonsignale (M₁ bis Mₙ) im Basisband nach dem bekannten Digital Sound 1Mbit/s (DS1)-Verfahren codiert und zu einem DS1/M-Signal zusammengefaßt werden
und ein oder mehrere dieser so erzeugten DS1/M-Signale nach dem bekannten Digital-Satellit-Radio (DSR)-Verfahren mittels eines Breitband-Übertragungssystems zu den einzelnen Sendestationen (S) des Sendernetzes übertragen werden.

2. Verfahren nach Anspruch 1, dadurch **gekennzeichnet,** daß die Datenreduktion des Datenflusses der Tonsignale (P) nach dem bekannten Masking Universal Subband Integrated Coding And Multiplexing (MUSICAM)-Verfahren erfolgt.

3. Verfahren nach Anspruch 1 oder 2, dadurch **gekennzeichnet,** daß die DS1/M-Signale nach dem DSR-Verfahren über eine Satelliten- oder Kabel-Übertragungsstrecke zu den einzelnen Sendestationen (S) des Sendernetzes übertragen werden.

4. Einrichtung zum Übertragen der digitalen Tonsignale (P) von Tonstudios zu den einzelnen Sendestationen (S) eines terrestrischen Rundfunk-Sendernetzes, **gekennzeichnet** durch
eine Breitband-Übertragungsstrecke (U₁, SAT, U₂, E) zwischen einem oder mehreren Tonstudios und den einzelnen Sendestationen (S) des Sendernetzes,
mindestens einen nach dem Digital Satellit Radio (DSR)-Verfahren arbeitenden, 16 Eingänge aufweisenden DSR-Multiplexer/Modulator (SFP), dessen Ausgang mit der Breitband-Übertragungsstrecke Verbunden ist und von dessen 16 Eingängen mindestens einer mit einem nach dem Digital Sound 1Mbit/s (DS1)-Verfahren arbeitenden DS1-Coder (DCA) verbunden ist, die Eingänge dieses DS1-Coders mit mehreren nach dem Masking Universal Subband Integrated Coding And Multiplexing (MUSICAM)-Verfahren arbeitenden Codern (C₁ bis Cₙ) verbunden sind und über den DSR-Multiplexer/ Modulator DS1-codierte datenreduzierte Tonsignale als DS1/M-Signale über die Breitband-Übertragungsstrecke zuden Sendestationen (S) übertragen werden,
und in den einzelnen Sendestationen (S) des Rundfunk-Sendernetzes mindestens ein DSR-Decoder (DEC₁ bis DECₘ) vorgesehen ist, durch welchen aus den übertragenen DS1/M-Signalen mehrere DS1/M'-Signale ausgewählt werden, die über einen Demultiplexer (DEMUX1) in die ursprünglichen datenreduzierten digitalen Tonsignale (M) umgewandelt werden.

5. Einrichtung nach Anspruch 4 zum übertragen der digitalen Tonsignale von den Tonstudios zu den einzelnen Sendestationen eines Digital-Audio-Broadcasting (DAB)-Sendernetzes, dadurch **gekennzeichnet,** daß die rückgewandelten datenreduzierten digitalen Tonsignale (M) unmittelbar dem Modulator (COFDM) der DAB-Sendestation zugeführt werden. (Fig. 2)

6. Einrichtung nach Anspruch 5, dadurch **gekennzeichnet,** daß der DAB-Sender nur ein einziges digitales Programmsignal mit der Nutzung einer VHF-FM-Bandbreite abstrahlt.

7. Einrichtung nach Anspruch 5 oder 6, dadurch **gekennzeichnet,** daß die DS1-Coder taktsynchronisiert sind und in einem Teil des Zusatzinformations-Kanal des DS1/M-Signals oder des DSR-Signals ein Synchronsignal übertragen wird, über welches die Zufuhr der Digitalsignale zum Modulator der Sendestation wortsynchronisierbar ist.

8. Einrichtung nach Anspruch 4 zum Übertragen der digitalen Tonsignale von Tonstudios zu den einzelnen Sendestationen eines VHF-FM-Sendernetzes, dadurch **gekennzeichnet,** daß die ruckgewonnenen datenreduzierten digitalen Tonsignale (M) Decodern (D₁ bis Dₙ) zugeführt werden, die den die psycnoakustischen Phänomene des menschlichen Ohres ausnützenden Codern der Quellenseite entsprechen, und diese damit wieder ruckgewonnenen ursprünglichen nicht datenreduzierten digitalen Tonsignale über Digital/Analog-Wandler als analoge Tonsignale den Modulatoren der VHF-FM-Sender (FM₁ bis FMₙ) der Sendestation zugeführt werden.

9. Einrichtung nach Anspruch 8 zum gleichzeitigen Übertragen von im Tonstudio zusammen mit den Tonsignalen erzeugten programmabhängigen Radio-Daten-System (RDS) Daten, dadurch **gekennzeichnet,** daß die RDS-Daten aller datenreduzierten Tonsignale (M) zusammengefaßt dem DS1-Coder zugeführt werden und im Zusatzinformationsteil der DS1/M-Signale übertragen werden und in der VHF-FM-Sendestation am Ausgang der DSR-Decoder (DEC₁ bis DECₘ) als gesonderte Daten ausgegeben und, wieder getrennt, dem RDS-Coder (RDS-C₁ bis RDS-Cₙ) der VHF-FM-Sender zugeführt werden.

10. Einrichtung nach einem der vorhergehenden Ansprüche 4 bis 9 dadurch **gekennzechnet,** daß ein Teil der insgesamt 16 DS1-Kanäle des DSR-Coders für die Übertragung von nicht datenreduzierten DS1-Signalen und nur ein Teil für die Übertragung von aus datenreduzierten Tonsignalen (M), auch solchen mit unterschiedlichem Reduktionsgrad, zusammengesetzten DS1/M-Signalen benutzt wird.

11. Empfänger zum Empfang von einem nach dem Digital Satellit Radio(DSR)-Verfahren aufbereiteten und uber ein Breitbandübertragungssystem übertragenen digitalen Tonsignal, dadurch **gekennzeichnet,** daß zum Empfang von nach dem Verfahren gemäß Anspruch 1 bis 3 übertragenen datenreduzierten Tonsignalen dem DSR-Decoder ein Demultiplexer (DEMUX) zur Auswahl des gewünschten Tonsignales und ein MUSICAM-Decoder (DMUSICAM) zugeordnet ist (Fig. 5).

## Claims

1. Process for transmission of the digital sound signals (P) of sound studios to the individual master stations (S) of a terrestrial network of broadcasting transmitters, characterised in that
the data flow of the digital sound signals (P) to be transmitted are initially data reduced according to a known data reduction process which takes into account the psychoacoustic phenomena of the human ear,
several of these data reduced digital sound signals (M₁ to Mₙ) are coded in the base band according to the known Digital Sound 1MBit/s (DS1) process and are grouped together into a DS1/M signal
and one or more of these DS1/M signals thus produced are transmitted according to the known Digital Satellite Radio (DSR) process by means of a broadband transmission system to the individual master stations (S) of the network of transmitters.

2. Process according to claim 1, characterised in that the data reduction of the data flow of the sound signals (P) takes place according to the known Masking Universal Subband Integrated Coding And Multiplexing (MUSICAM) process.

3. Process according to claim 1 or 2, characterised in that the DS1/M signals are transmitted using the DSR process via a satellite or cable transmission path to the individual master stations (S) of the network of transmitters.

4. Device for transmission of the digital sound signals (P) of sound studios to the individual master stations (S) of a terrestrial network of broadcasting transmitters, characterised by
a broadband transmission path (U₁, SAT, U₂, E) between one or several sound studios and the individual master stations (S) of the network of transmitters,
at least one DSR Multiplexer/Modulator (SFP) exhibiting 16 inputs, operating according to the Digital Satellite Radio (DSR) process, whose output is linked to the broadband transmission path and of whose 16 inputs at least one is linked to a DS1 Coder (DCA) operating according to the Digital Sound 1Mbit/s (DS1) process, the inputs of this DS1 Coder are linked to several Coders (C₁ to Cₙ) operating according to the Masking Universal Subband Integrated Coding And Multiplexing (MUSICAM) process, and DS1 coded data reduced sound signals are transmitted as DS1/M signals over the broadband transmission path to the master stations (S) via the DSR Multiplexer/Modulator,
and in the individual master stations (S) of the broadband network of transmitters at least one DSR Decoder (DEC₁ to DECₘ) is provided, by which several DS1/M' signals are selected from the DS1/M signals transmitted, which are converted via a Demultiplexer (DEMUX1) into the original data reduced digital sound signals (M).

5. Device according to claim 4 for transmission of the digital sound signals of the sound studio to the individual master stations of a Digital Audio Broadcasting (DAB) network of transmitters, characterised in that the reconverted data reduced digital sound signals (M) are taken directly to the Modulator (COFDM) of the DAB master station. (Fig. 2)

6. Device according to claim 5, characterised in that the DAB transmitter only emits a single digital program signal using a VHF-FM band width.

7. Device according to claim 5 or 6, characterised in that the DS1 Coders are clock synchronised and in part of the supplementary information channel of the DS1/M signal or of the DSR signal a synchronisation signal is transmitted, via which the supply of the digital signals to the modulator of the master station is word synchronisable.

8. Device according to claim 4 for transmission of the digital sound signals of sound studios to the individual master stations of a VHF-FM network of transmitters, characterised in that the recovered data reduced digital sound signals (M) are taken to Decoders (D₁ to Dₙ), which correspond to Coders on the source side which utilise the psychoacoustic phenomena of the human ear, and these thus re-recovered original non data reduced digital sound signals are taken via digital/analog converters as analog sound signals to the modulators of the VHF-FM transmitters (FM₁ to FMₙ) of the master stations.

9. Device according to claim 8 for simultaneous transmission of programme-dependent Radio Data System (RDS) data produced in the sound studio together with the sound signals, characterised in that the RDS data of all data reduced sound signals (M) are taken in a group to the DS1 Coder and are transmitted in the supplementary information section of the DS1/M signals and output in the VHF-FM master station at the output of the DSR Decoders (DEC₁ to DECₘ) as separate data, and still separate, are taken to the RDS Coders (RDS-C₁ to RDS-Cₙ) of the VHF-FM transmitters.

10. Device according to one of the previous claims 4 to 9, characterised in that some of the total 16 DS1 channels of the DSR Coder are used for transmission of non data reduced DS1 signals, and only some are used for the transmission of DS1/M signals made up of data reduced sound signals (M), including those with different degrees of reduction.

11. Receiver for reception of a digital sound signal prepared using the Digital Satellite Radio (DSR) process and transmitted via a broadband transmission system, characterised in that, for reception of the data reduced sound signals transmitted using the process according to claims 1 to 3, the DSR Decoder is assigned a Demultiplexer (DEMUX) for selection of the desired sound signal and a MUSICAM Decoder (DMUSICAM) (Fig. 5).

## Revendications

1. Procédé de transmission d'un signal son, numérique (P) à partir de studios d'enregistrement vers les différents postes émetteurs (S) d'un réseau d'émetteurs radios terrestres, caractérisé en ce que le flux de données des signaux son (P) numériques, à transmettre est tout d'abord comprimé selon un procédé de compression de données, connu, tenant compte des phénomènes psycho-acoustiques de l'oreille humaine, chaque fois plusieurs de ces signaux son (M₁...Mₙ) numériques à compression de données étant codés dans la bande de base selon le procédé numérique de traitement de son 1Mbit/s (DS1) connu et ces signaux sont réunis en un signal DS1/M, et un ou plusieurs de ces signaux DS1/M, créés sont transmis selon le procédé de radio satellite numérique connu (DSR) par un système de transmission en mode large vers les différents postes d'émission (S) du réseau d'émetteurs.

2. Procédé selon la revendication 1, caractérisé en ce que la compression des données du flux de données des signaux son (P) se fait suivant le procédé connu (MUSICAM) (Masking Universal Subband Integrated Coding And Multiplexing).

3. Procédé selon la revendication 1 ou 2, caractérisé en ce que les signaux DS1/M sont transmis selon le procédé DSR par une transmission par satellite ou câble vers les différents postes émetteurs (S) du réseau d'émetteurs.

4. Installation de transmission de signaux son numériques (P) à partir de studios d'enregistrement vers les différents postes émetteurs (S) d'un réseau d'émetteurs radios terrestres caractérisée par un chemin de transmission en bande large (U₁, SAT, U₂, E) entre un ou plusieurs studios d'enregistrement et les différents postes émetteurs (S) du réseau d'émetteurs, au moins un multiplexeur DSR/modulateur (SFP) fonctionnant selon le procédé Digital Satellit Radio (DSR) et ayant 16 entrées et dont la sortie est reliée au chemin de transmission en bande large, au moins l'une des 16 entrées étant reliée à un codeur DS1 (DCA) travaillant selon le procédé Digital Sound 1Mbit/s (DS1), les entrées de ce codeur DS étant reliées à plusieurs codeurs (C₁...Cₙ) fonctionnant selon le procédé (MUSICAM) (Masking Universal Subband Integrated Coding And Multiplexing) et les signaux son, à compression de données à codage par le multiplexeur DSR/modulateur DS1 sont transmis vers les postes émetteurs (S) sous la forme de signaux DS1/M par le chemin de transmission en bande large, et dans les différents postes émetteurs (S) du réseau d'émetteurs radios, il est prévu au moins un décodeur DSR (DEC₁...DECₘ) qui sélectionne plusieurs signaux DS1/M' à partir des signaux DS1/M transmis, ces signaux étant convertis par un démultiplexeur (DEMUX1) en signaux son numériques (M) à compression de données, d'origine.

5. Installation selon la revendication 4 pour la transmission de signaux son numériques de studios d'enregistrement vers différents postes émetteurs d'un réseau d'émetteurs (DAB) (Digital-Audio-Broadcasting), caractérisée en ce que les signaux son numériques (M) à compression de données, transformés en retour, sont appliqués directement au modulateur (COFDM) du poste émetteur DAB.

6. Installation selon la revendication 5, caractérisée en ce que l'émetteur DAB n'émet qu'un seul signal de programme numérique en utilisant une largeur de bande VHF-FM.

7. Installation selon la revendication 5 ou 6, caractérisée en ce que les codeurs DS1 sont synchronisés en cadence et dans une partie du canal d'informations complémentaires du signal DS1/M ou du signal DSR on transmet un signal de synchronisation qui est susceptible de synchroniser par les mots, l'alimentation des signaux numériques vers le modulateur du poste émetteur.

8. Installation selon la revendication 4 pour la transmission de signaux son numériques de studios d'enregistrement vers les différents postes émetteurs d'un réseau d'émetteurs VHF-FM, caractérisée en ce que les signaux son numériques (M), à compression de données, récupérés, sont appliqués à des décodeurs (D₁..Dₙ) qui correspondent aux codeurs du côté source, utilisant les phénomènes psycho-acoustiques de l'oreille humaine et les signaux son numériques à données non comprimées, d'origine, ainsi récupérés, sont fournis par des convertisseurs numériques/analogiques sous la forme de signaux son analogiques vers les modulateurs des émetteurs VHF-FM (FM₁...FMₙ) du poste émetteur.

9. Installation selon la revendication 8 pour la transmission simultanée de données (RDS) (Système de données radios) dépendant du programme, créé avec les signaux son dans le studio d'enregistrement, caractérisée en ce que les données RDS de tous les signaux son à compression de données (M) sont réunies et fournies au codeur DS1 et sont transmises dans la partie d'informations complémentaires des signaux DS1/M, et sont émises comme données particulières dans le poste émetteur VHF-FM à la sortie du décodeur DSR (DEC₁...DECₘ) puis sont de nouveau fournies, séparées, au codeur RDS (RDS-C₁...RDS-Cₙ) des émetteurs VHF-FM.

10. Installation selon l'une des revendications précédentes 4 à 9, caractérisée en ce qu'une partie de l'ensemble des 16 canaux DS1 du décodeur DSR est utilisée pour la transmission de signaux à données non comprimées DS1 et seulement une partie pour la transmission de signaux son (M) à compression de données, y compris les signaux DS1/M composés, avec un degré de compression différent.

11. Récepteur pour la réception d'un signal son numérique transmis par un système travaillant selon le procédé (DSR) (Digital Satellit Radio) et transmis par un système de transmission en bande large, caractérisé en ce que pour la réception de signaux son à compression de données transmis selon le procédé des revendications 1 à 3, un démultiplexeur (DEMUX) pour la sélection du signal son choisi et un décodeur MUSICAM (DMUSICAM) sont associés au décodeur DSR (figure 5).
